# EUROPÄISCHE PATENTSCHRIFT

(11) **EP 4 106 119 B1**
(45) Veröffentlichungstag und Bekanntmachung des Hinweises auf die Patenterteilung: **26.11.2025**
(21) Anmeldenummer: 21180450.5
(22) Anmeldetag: 18.06.2021
(51) Int. Cl.: H01R 25/14, H02G 3/04, H02G 3/06

(54) **STROMSCHIENE EINES BELEUCHTUNGSSYSTEMS MIT LEITUNGSHALTERN UND ADERNKÄFIG**
CONDUCTOR RAIL OF A LIGHTING SYSTEM WITH CABLE HOLDERS AND A CORE CAGE
BARRE CONDUCTRICE D'UN SYSTÈME D'ÉCLAIRAGE POURVU DE PORTE-CÂBLE ET DE CAGE À FILS

(43) Veröffentlichungstag der Anmeldung: 21.12.2022
(73) Patentinhaber: Siteco GmbH, 83301 Traunreut (DE)
(72) Erfinder: Schiebl, Matthias, 83558 Maitenbeth (DE); Graßl, Robert, 83558 Maitenbeth (DE); Hösle, Tobias, 83329 Waging (DE)
(74) Vertreter: Schmidt, Steffen

(56) Entgegenhaltungen:
- EP-A2- 2 624 389
- WO-A1-2019/081592
- DE-B3- 102016 114 070
- DE-U1- 202010 007 710
- GB-A- 2 407 439

## Beschreibung

Die vorliegende Erfindung betrifft eine Stromschiene für Funktionseinsätze eines Beleuchtungssystems, welche speziell dafür eingerichtet sind, aus mehreren Teilen der Länge nach aneinandergefügt zu werden.

Beleuchtungssysteme, die modulweise auf der Basis von einzelnen Stromschienen und Funktionseinsätzen, die in den Stromschienen montiert werden, beruhen, sind im Bereich von Innenleuchten für verschiedene Anwendungen sehr geläufig. Die Systeme zeichnen sich dadurch aus, dass sie in verschiedenen Konfigurationen und insbesondere in unterschiedlichen Längen unter Verwendung von standardisierten Bauteile individuell an eine Raumsituation angepasst werden können. Um die Flexibilität bereitzustellen, ist jedoch der Aufbau der Module unter Umständen komplex. Dies stellt insbesondere dann ein Problem dar, wenn die Montage des Beleuchtungssystems auch von Nicht-Fachkräften vorgenommen werden soll.

Ein Beispiel eines solchen Stromschienensystems ist in der DE 10 2017 125 214 A1 beschrieben. Die vorliegende Erfindung stellt Verbesserungen dieses Systems bereit.

In dem vorhergehend genannten Stand der Technik ist speziell ein Problem gegeben, welches beim Aneinanderfügen von der Durchgangsverdrahtung innerhalb der Stromschienen entsteht. Durch unsachgemäße Handhabung der Komponenten kann es dazu kommen, dass sich Teile nicht mehr richtig aneinanderfügen lassen oder nach dem Aneinanderfügen elektrische Fehlfunktionen entstehen.

GB 2 407 439 A offenbart eine Schutzeinrichtung füren Kabelanordnung, um eine Schutzhülse um ein Bündel von ein oder mehreren Kabeln zu bilden. Zwei stirnseitig aneinandergrenzende Schutzeinrichtungen, mit Kanälen für Kabelbündel, können durch eine zweite Schutzeinrichtung, welche den Abstand zwischen den zwei ersten Schutzeinrichtungen verbindet, überbrückt werden. Die zweite Schutzeinrichtung umfasst eine Anzahl von Kanälen, in welchen die Kabelbündel verlaufen. Eine ähnliche Einrichtung ist auch in der EP 2 624 389 A2 offenbart.

DE 10 2016 114070 B3 offenbart einen Stromschienenverbinder zur elektrisch leitenden Verbindung von Leitungen an Stegen eines Stromführungsprofils, das eine Oberseite hat, an der die Leitungen über die Zwischenräume zwischen den Stegen zugänglich sind.

WO 2019/081592 A1 offenbart einen Leitungshalter, der eine Vielzahl von parallel zueinander angeordneten ersten Ausnehmungen und eine Vielzahl von parallel zueinander angeordneten zweiten Ausnehmungen umfasst, wobei die ersten Ausnehmungen und die zweiten Ausnehmungen zur Aufnahme elektrischer Leitungen vorgesehen sind. Außerdem ist ein Stromschienenelement, ein Stromschienensystem und ein mechanisches Verbindungselement für ein Stromschienensystem beschrieben.

Aufgabe der vorliegenden Erfindung ist es, Verbesserungen für bekannte Stromschienensysteme bereitzustellen, so dass Fehler beim Montieren des Stromschienensystems wirksam vermieden werden.

Gelöst wird die Aufgabe durch eine Stromschiene nach Anspruch 1.

Eine Besonderheit der erfindungsgemäßen Stromschiene liegt in einem Adernkäfig, der stirnseitig auf Leitungshalter für das Aneinanderfügen mehrerer Leitungshalter vorgesehen ist. Die Leitungshalter sind in Tragschienen angeordnet und halten einzeln zueinander ausgerichtete elektrisch leitfähige Leiter, auch als Adern bezeichnet, die von Stromabnehmern der Funktionseinsätze kontaktierbar sind. Die Leitungshalter sind beispielsweise als Elemente mit länglichen Nuten gebildet, wobei die Nuten parallel zueinander ausgerichtet sind und zum Befestigen von blanken elektrischen Leitern, z.B. vollständig isolationsfreie Kupferkabel, eingerichtet sind. Diese elektrischen Leiter müssen beim stirnseitigen Verbinden der Leitungshalter mechanisch und elektrisch miteinander verbunden werden. Dazu ist üblicherweise vorgesehen, dass die Leiterenden an einem stirnseitigen Ende der Leitungshalter ein kurzes Stück überstehen. Dieser Überstand wird dafür genutzt, um mit elektrischen Steckkontakten die Leiter mit den Leitern im benachbarten Leitungshalter zu verbinden. Das Problem ist jedoch, dass beim Transport der vorkonfektionierten Leitungshalter, d.h. der Leitungshalter einschließlich der darin bereits montierten Leiter, die überstehenden Enden leicht beschädigt werden können. Beim Aneinanderfügen zweier Leitungshalter mit Leitern kann es dann passieren, dass die überstehenden Leitungsenden nicht korrekt in die Steckaufnahme des benachbarten Leitungshalters eingerückt werden. Der Adernkäfig gemäß der vorliegenden Erfindung bietet dafür einen Schutz für die Leiterenden, indem er auf einem stirnseitigen Ende des Leitungshalters aufgesteckt ist und dabei die überstehenden Leitungsenden vollständig abdeckt. Eine mechanische Beschädigung der Leitungsenden beim Transport kann dadurch wirksam vermieden werden. Ferner ist der Adernkäfig so ausgebildet, dass er beim Aneinanderfügen mit einem benachbarten Leitungshalter nicht entfernt werden muss. Die zwei aneinandergefügten Leitungshalter werden ineinandergesteckt, wobei der Adernkäfig im stirnseitigen Verbindungsbereich der beiden Leitungshalter verbleibt. Ferner ist es von Vorteil, dass der Adernkäfig separat von dem Leitungshalter ausgebildet ist, weil es dadurch möglich ist, auch Stromschienensysteme aus dem Stand der Technik mit einem Adernkäfig nachzurüsten.

Gemäß einer bevorzugten Ausführungsform weist der Adernkäfig für alle oder wenigstens für einige der Leitungsenden Durchgangsöffnungen auf, welche jeweils eine der Leitungsenden umgreifen. Da der Adernkäfig vorzugsweise aus einem isolierenden Material gebildet ist, sind die Leitungsenden in dieser Ausführungsform voneinander getrennt, so dass die Gefahr eines elektrischen Kurzschlusses durch Verbiegen von Leitungsenden vor oder während des Zusammenfügens der Leitungshalter verringert wird.

Gemäß einer bevorzugten Ausführungsform weisen die Durchgangsöffnungen auf einer in Steckrichtung zu den Leitungsenden weisenden Seite konische Trichter und/oder Einführungsrampen auf. Die konischen Trichter und/oder Einführungsrampen erleichtern das Aufstecken des Adernkäfigs auf den Leitungshalter bzw. auf die aus dem Leitungshalter hervorstehenden Leitungsenden.

Gemäß einer bevorzugten Ausführungsform ist der Adernkäfig mit einem oder mehreren Schnapphaken an dem einen der Leitungshalter, dessen Leitungsenden vom Adernkäfig abgedeckt sind, gesichert. Dadurch kann der Adernkäfig mit dem Leitungshalter so verbunden werden, dass er beim Transport der Einzelteile nicht abrutscht. Alternativ wäre auch eine reibschlüssige Verbindung möglich. Eine formschlüssige Verbindung, wie die Schnapphaken, hat jedoch den Vorteil eines sichereren Halts, auch wenn thermische Verformungen auftreten. Ferner bieten die Schnapphaken eine gewisse Flexibilität, so dass Fertigungstoleranzen oder Toleranzen durch Wärmeausdehnung ausgeglichen werden können.

Gemäß einer bevorzugten Ausführungsform weist der Adernkäfig wenigstens eine, vorzugsweise zwei, Schutzwände auf, die in Ebenen parallel zu den Leitern über und/oder unter den Leitungsenden angeordnet sind. Die eine oder die zwei Schutzwände sichern die vorstehenden Leitungsenden ringsum vor möglichen Einwirkungen oder Beschädigungen.

Gemäß einer bevorzugten Ausführungsform verjüngen sich eine oder beide Schutzwände in der Richtung entgegengesetzt zu der Steckrichtung, mit welcher der Adernkäfig auf das stirnseitige Ende des Leitungshalters aufgesteckt wird. In dieser Ausführungsform erleichtern die Schutzwände ferner das Aufstecken eines Steckers auf dem zweiten Leitungshalter, weil durch die Verjüngung der Schutzwände der Adernkäfig beim Aufstecken des zweiten Leitungshalters in die richtige Position geführt wird.

Gemäß einer bevorzugten Ausführungsform sind die Leitungshalter eingerichtet, um die Leiter in wenigstens einer ersten und einer zweiten parallelen Ebene versetzt zueinander zu halten, und weist der Adernkäfig Niederdrückrampen entsprechend der Anzahl der Leiter in der zweiten Ebene auf, welche eingerichtet sind, um die Leiter in der zweiten Ebene beim Aufstecken auf die Leitungsenden gegenüber der ersten Ebene wegzudrücken. In dieser Ausführungsform dient der Adernkäfig nicht nur zum Schutz der Leitungsenden, sondern hat ferner die Funktion, dass er die Leiter selbst auch in die richtige Position drückt. Bei den komplexen Anordnungen mit Leitern in mehreren Ebenen ist es wichtig, dass die Leiter bis zu ihren Enden in der richtigen Ebene bleiben, um den Anschluss mit den Leitern in dem nächsten Leitungshalter zu ermöglichen. Die Niederdrückrampen dienen dazu, beim Aufstecken des Adernkäfigs auf den Leitungshalter, die Leitungsenden in der zweiten Ebene zu halten. Die Neiderdrückrampen bilden dazu eine Rampe, welche von der Seite der ersten Ebene an den Leitungsenden der zweiten Ebene angreifen und durch die Steckbewegung über die Rampe eine Kraft auf die Leitungsenden der zweiten Ebene bewirken, welche die Leitungsenden in die zweite Ebene zwingt.

Erfindungsgemäß sind die Leiter der zwei Leitungshalter jeweils paarweise in Längsrichtung durch elektromechanische Steckverbinder elektrisch und mechanisch verbunden, wobei die elektromechanischen Steckverbinder wenigstens teilweise in den Adernkäfig hineinragen. Dadurch erfolgt die mechanische und elektrische Verbindung zwischen den Leitern benachbarter Leitungshalter durch metallische Steckverbinder. Da die Steckverbinder in den Adernkäfig beim Montieren des zweiten Leitungshalters hineinragen, muss kein Leitungsende aus dem Adernkäfig hervorstehen, so dass der Schutz der Leitungsenden bis zur Montage der Stromschiene gewährleistet ist.

Gemäß einer bevorzugten Ausführungsform weisen die elektromechanischen Steckverbinder jeweils wenigstens vier Schenkel auf, wobei jeweils wenigstes zwei der Schenkel ein Leitungsende klammerartig umgreifen. In dieser Ausführungsform lassen sich die Steckverbinder kostengünstig durch einen Federstahl bilden. Da jedes Leitungsende von wenigstens zwei Seiten klammerartig umgriffen wird, ist eine gute elektrische Kontaktierung gewährleistet.

Gemäß einer bevorzugten Ausführungsform sind die elektromechanischen Steckverbinder in einem Stecker zusammengefasst und entsprechend der Lage der zu verbindenden Leiter ausgerichtet. In dieser Ausführungsform sind alle Steckverbinder in einem Stecker zusammengefasst, wobei die Steckverbinder jeweils metallisch ausgebildet sind, während der übrige Stecker vorzugsweise vollständig aus einem isolierendem Material gebildet ist, so dass kein Kurzschluss zwischen Leitern entsteht. Die Zusammenfassung der einzelnen Steckverbinder in einem Stecker erleichtert die Handhabung beim Zusammenfügen der Stromschienen. Vorzugsweise ist der Stecker bereits beim Leuchtenhersteller auf der jeweils dem Adernkäfig entgegengesetzten Stirnseite des Leitungshalters montiert.

Gemäß einer bevorzugten Ausführungsform taucht der Stecker beim Zusammenfügen der Leitungshalter in dem Adernkäfig teilweise ein und liegt vorzugsweise, bei der die Ausführungsform mit sich verjüngender(n) Schutzwand (oder Schutzwänden), wenigstens eine der sich verjüngenden Schutzwände an dem Stecker an. Da der Stecker in dem Adernkäfig teilweise eintaucht, müssen keine Leistungsenden aus dem Adernkäfig hervorstehen. Ferner können die sich verjüngenden Schutzwände an dem Stecker anliegen, so dass das Einschieben des Steckers in den Adernkäfig erleichtert wird, weil die Seitenwände des Adernkäfigs den Stecker beim Einführen in die richtige Position führen.

Erfindungsgemäß ist der Adernkäfig so eingerichtet, dass er auf stirnseitige Leitungsenden von Leitern in einem der Leitungshalter aufsteckbar ist und dabei die Leitungsenden in einer Länge, mit der sie über ein stirnseitiges Ende des Leitungshalters überstehen, abdecken. Da der Adernkäfig separat und unabhängig von den übrigen Teilen des Stromschienensystems gebildet werden kann, eignet sich der Adernkäfig auch als Ergänzung zum Nachrüsten bereits bekannter Stromschienensysteme.

Weitere Vorteile und Merkmale der vorliegenden Erfindung werden aus der nachfolgenden Beschreibung deutlich, die in Verbindung mit den beigefügten Zeichnungen gegeben wird. In den Zeichnungen ist Folgendes dargestellt:
- Figur 1: zeigt eine Aufsicht auf die Stirnseite eines Adernkäfigs, mit welcher der Adernkäfig auf einen Leitungshalter aufgesteckt wird.
- Figur 2: zeigt eine perspektivische Ansicht des Adernkäfigs.
- Figur 3: zeigt eine weitere perspektivische Ansicht des Adernkäfigs.
- Figur 4: zeigt eine perspektivische Ansicht eines Abschnitts einer Stromschiene, während der Adernkäfig aufgesteckt wird.
- Figur 5: zeigt eine Aufsicht auf eine Stromschiene während des Zusammenfügens zweier Tragschienen.
- Figur 6: zeigt die Aufsicht nach Figur 5, wenn die Tragschienen zusammengefügt sind.
- Figur 7: zeigt eine perspektivische Ansicht zweier Leitungshalter im stirnseitigen Kopplungsbereich während des Zusammenfügens.
- Figur 8: zeigt eine perspektivische Ansicht eines Steckers an einem stirnseitigen Abschnitt eines Leitungshalters auf der dem Adernkäfig entgegengesetzten Seite.
- Figur 9: zeigt eine perspektivische Ansicht einer Stromschiene an einem stirnseitigen Ende mit dem Stecker nach Figur 8.
- Figur 10: zeigt eine perspektivische Ansicht der Stromschiene an einem stirnseitigen Ende mit einem Adernkäfig gemäß den Figuren 1 bis 3.
- Figur 11: zeigt eine perspektivische Ansicht zweier Leitungshalter im stirnseitigen Verbindungsbereich mit Stecker nach Figur 8 und Adernkäfig nach Figuren 1 bis 3.

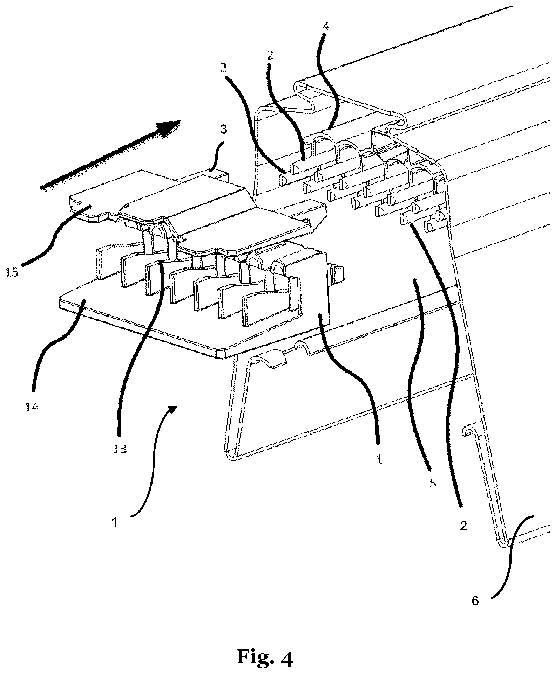

Die Erfindung bezieht sich auf eine Stromschiene, die modular aus mehreren Teilstücken zusammengesetzt wird. Jedes Teilstück umfasst eine Trägerschiene 6 und wenigstens einen Leitungshalter 4. Die Trägerschiene 6 ist ein durchgängiges Profil, welches im Querschnitt etwa U-förmig ist. Im durch das U-Profil definierten Innenbereich wird ein Aufnahmeraum 5 für Funktionseinsätze (in den Figuren nicht dargestellt) eines Beleuchtungssystems bereitgestellt. Die Funktionseinsätze können beispielsweise längliche Leuchten oder andere Zusatzgeräte sein. Um die Funktionseinsätze elektrisch zu versorgen, sind auf dem Boden des U-Profils der Trägerschiene 6 die Leitungshalter 4 angeordnet, welche blanke elektrische Leiter 2 aufnehmen. Wie beispielsweise in Figur 4 zu sehen ist, hält ein Leitungshalter 4 insgesamt vierzehn Leiter 2 in zwei parallelen Ebenen, in denen jeweils sieben Leiter 2 versetzt zueinander angeordnet sind. Es ist zu verstehen, dass die Gesamtzahl der Leiter 2 und die Anzahl der Ebenen lediglich beispielhaft sind. Es können auch mehr oder weniger Leiter in jeder Ebene und es können auch eine oder mehr als zwei Ebenen vorhanden sein.

Die Leiter 2 liegen in dem Leitungshalter 4 vollständig ohne Isolierung, wobei der Leitungshalter 4 selbst aus einem isolierenden Material gebildet ist, so dass die Leiter 2 elektrisch isoliert sind. Die Leiter 2 sind von dem Aufnahmeraum der Trägerschiene 2 zugänglich, so dass ein Funktionseinsatz mit Stromabnehmern an einer beliebigen Stelle die Leiter 2 kontaktieren kann.

Die Trägerschienen 6 und Leitungshalter 4 müssen zur Bildung einer längeren Stromschiene stirnseitig aneinandergefügt werden. Dazu ist es außerdem notwendig, die Leiter 2 der jeweils benachbarten Module mechanisch und elektrisch miteinander zu verbinden.

Die Leiter 2 stehen mit ihren Enden jeweils über das stirnseitige Ende des Leitungshalters 4 hervor, wie beispielsweise in Figur 4 dargestellt ist. Mit diesem Überstand können die Leiter 2 an die Leiter 2 des benachbarten Leitungshalters 4 angekoppelt werden. Problematisch ist jedoch, dass die Leitungshalter frei überstehen und dadurch beim Transport im noch nicht verbundenen Zustand leicht beschädigt werden können, so dass der problemlose Anschluss mit dem benachbarten Modul nicht mehr möglich ist.

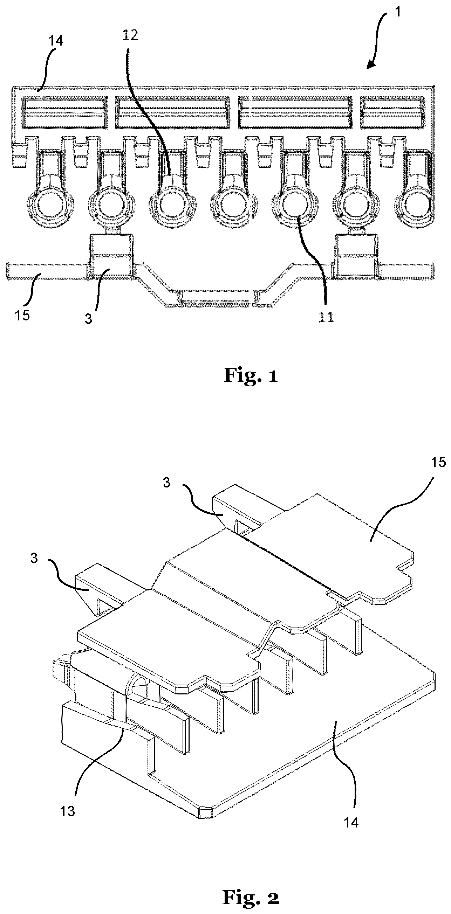

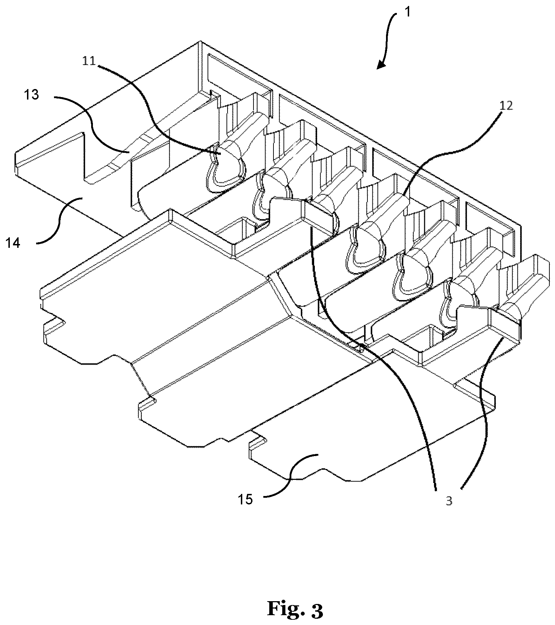

Die Erfindung sieht dazu einen Adernkäfig 1, ebenfalls aus einem Isolierenden Material, vor, der in den Figuren 1 bis 3 als Einzelteil dargestellt ist und in Figur 4 dargestellt ist, wie auf das stirnseitige Ende des Leitungshalters 4 aufgesteckt wird. Der Adernkäfig 1 umfasst eine Anzahl von Durchgangsöffnungen, die insgesamt der Anzahl von Leiter 2 in einer Stromschiene entspricht. Für eine Ebene der Leiter weist der Adernkäfig in der dargestellten Ausführungsform trichterförmige Eingänge 11 auf. Diese Trichter 11 dienen dazu, um das Aufstecken des Adernkäfigs 1 auf die Enden der Leiter 2 zu erleichtern. Ferner weist der Adernkäfig 1 auch noch Führungsrampen 12 auf, die ebenfalls das Einfügen der Leiterenden beim Aufstecken erleichtern.

Für die zweite Ebene von Leiter 2 sind ebenfalls Durchgangsöffnungen in dem Adernkäfig 1 vorgesehen, wobei diese Öffnungen Niederdrückrampen 13 auf der den Trichtern entgegengesetzten Seite aufweisen, welche dazu bestimmt sind, die Leiter 2 der zweiten Ebene beim Aufschieben des Adernkäfigs in eine der ersten Ebenen der Leiter 2 entgegensetzte Richtung zu drücken. Dadurch werden die Leiter 2 der zweiten Ebene (in den Figuren die dem Boden der U-förmigen Tragschiene 1 nähergelegene Ebene) in die richtige Position gerückt. Dies ist wichtig für den Fall, dass sich ein oder mehrere Leiter in der zweiten Leiterebene vor dem Aufdecken des Adernkäfigs bereits aus ihrer Position etwas gelöst haben.

Der Adernkäfig 1 weist ferner zwei Schnapphaken 3 auf, die im montierten Zustand in entsprechende Rücksprünge des Leitungshalters 4 eingreifen, um den Adernkäfig 1 an dem stirnseitigen Ende des Leitungshalters 4 zu sichern.

Der Adernkäfig 1 weist ferner auf der Ober- und Unterseite jeweils eine durchgängige Schutzwand 14, 15 auf, welche alle Durchführungen innerhalb des Adernkäfigs 1 vollständig nach oben bzw. unten abdecken. Dadurch ist ein Berührschutz für die Leiter 2 gegeben.

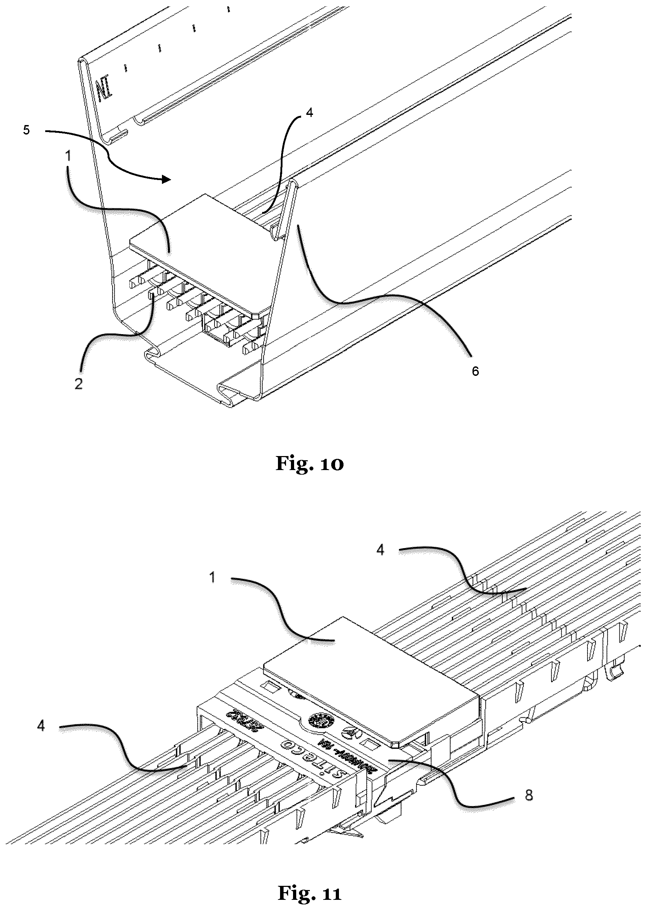

Erfindungsgemäß ist der Adernkäfig 1 so ausgebildet, dass im montierten Zustand des Adernkäfigs 1 die Enden der Leiter 2 stirnseitig nicht mehr überstehen. Die wenigstens die äußere Kante der einen Schutzwand 14 fluchtet oder steht sogar über die Enden der Leiter 2 hinaus, wie z.B. in Figur 10 zu sehen ist. Dadurch ist ein effektiver Schutz der Leitungsenden gegen ein Verbiegen beim Transport des entsprechenden Abschnitts der Stromschiene gegeben.

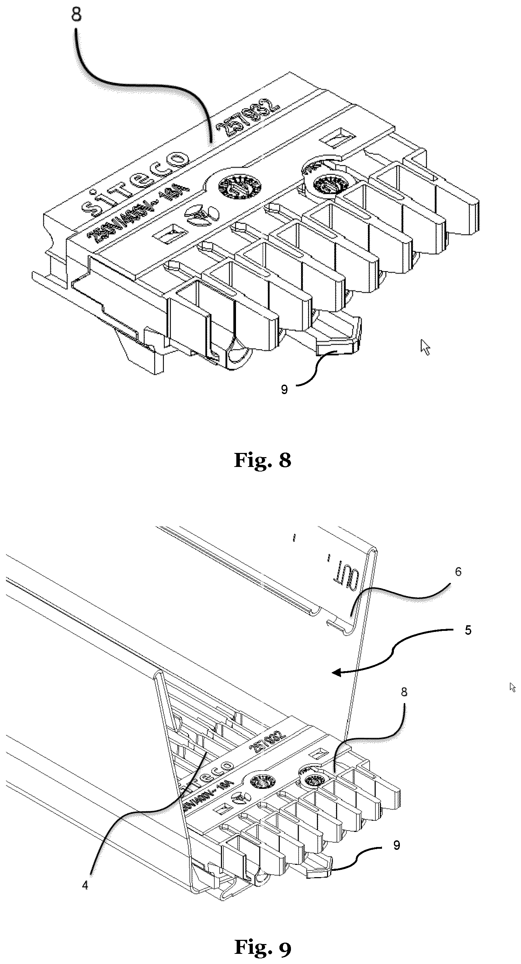

Zum stirnseitigen Verbinden zweier Elemente der Stromschiene, die jeweils eine Tragschiene 6 und wenigstens einen Leitungshalter 1 umfassen, ist auf der dem Adernkäfig 1 gegenüberliegenden Stirnseite der benachbarten Tragschiene bzw. Leitungshalter ein Stecker 8 aufgesteckt, welcher als Einzelteil in Figur 8 und im montierten Zustand in Figur 9 dargestellt ist.

Der Stecker 8 umfasst im Innenraum für jede Leitung 2 eine Federklammer (in den Figuren nicht dargestellt), die wenigstens vier Schenkel, jeweils zwei Schenkel auf entgegengesetzten Enden, aufweist. Die Schenkel umgreifen klammerartig die Leiter und können dadurch eine elektrisch leitende Verbindung zwischen den Leitern benachbarter Leitungshalter herstellen.

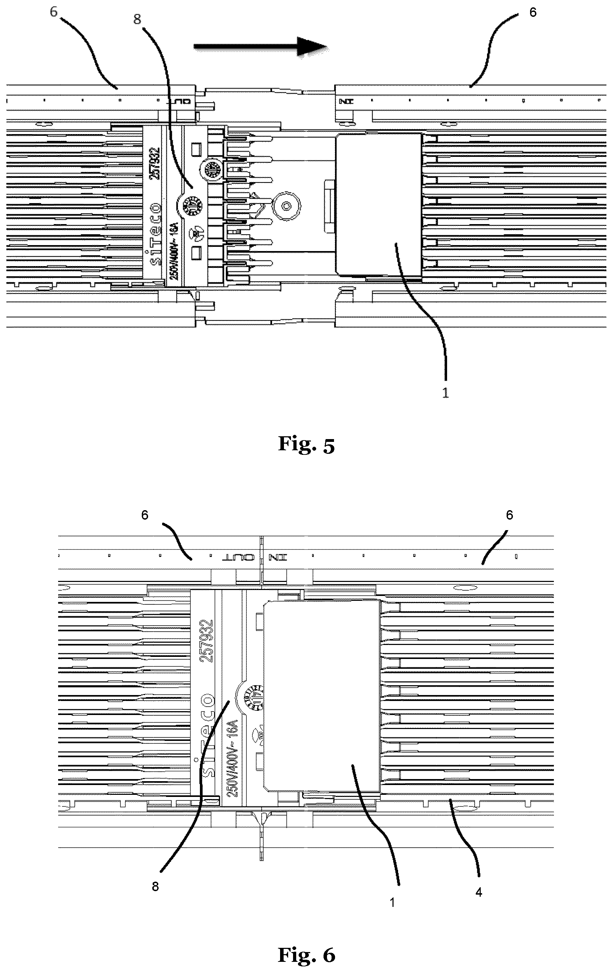

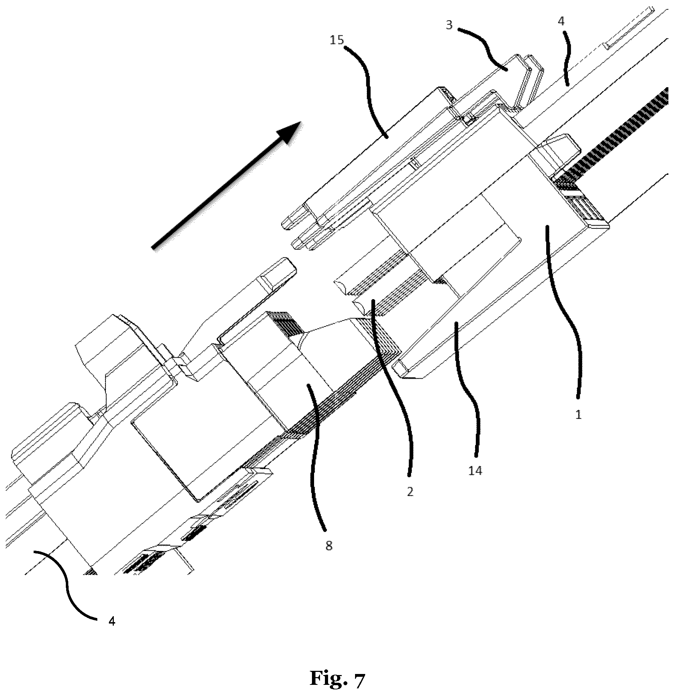

Der Stecker 8 ist bereits werkseitig auf ein stirnseitiges Ende des Leitungshalters 1 in der Tragschiene 6 aufgesteckt. Der Stecker 8 ist so ausgebildet, dass er nach Montage der Stromschiene in den Adernkäfig 1 des benachbarten Leitungshalters 4 eingreifen kann, um die darin befindlichen Ende der Leiter 2 zu kontaktieren. Der Vorgang zum Zusammenfügen des Steckers 8 mit dem Adernkäfig 1 zweier benachbarter Abschnitte der Stromschiene ist in den Figuren 5 und 6 dargestellt. Um das Aufstecken des Steckers 8 auf den Adernkäfig 1 zu erleichtern, ist wenigstens eine der Schutzwände 14, 15 konisch ausgebildet. Wie in Figur 7 von der Seite zu sehen ist, wird dadurch der Stecker 8 am äußeren Ende beim Aufstecken auf den Adernkäfig 1 bzw. auf die darin befindlichen Leiterenden 2 geführt.

Ferner ist am Stecker 8 ein etwa pfeilförmiges Rastelement 9 vorgesehen, welches in einer Vertiefung an der Schutzwand 15 des Adernkäfigs 1 eingreift, um den Stecker 8 an dem Adernkäfig 1 zu sichern.

Der elektromechanische Stecker 8 taucht beim Aneinanderfügen der Tragschienen soweit in den Adernkäfig 1 ein, dass auch die Leitungsverbindungen innerhalb des Steckers 8 vollständig von den Schutzwänden 14 und 15 des Adernkäfigs überdeckt sind. Insgesamt ist dadurch ein mechanischer und elektrischer Berührschutz der Leiter 2 im Verbindungsbereich zweiter Leitungshalter gewährleistet.

An der vorhergehend beschrieben Ausführungsform können zahlreiche Modifikationen vorgenommen werden, ohne von dem Gegenstand der Erfindung, wie er in den Ansprüchen festgelegt ist, abzuweichen. Insbesondere ist die Anzahl und die Lage der Leiter in den Leitungshaltern nicht eingeschränkt. Ferner ist es möglich, dass die Leitungshalter nicht am Boden der Tragschiene sitzen, sondern beispielsweise an den Seitenwänden. Es können auch mehr als nur jeweils ein Leitungshalter in einer Tragschiene vorgesehen sein. Beispielsweise können zwei oder mehr Leitungshalter hintereinander oder nebeneinander in einer Tragschiene angeordnet sein.

### BEZUGSZEICHENLISTE

- 1: Adernkäfig
- 3: Schnapphaken
- 4: Leitungshalter
- 5: Aufnahmeraum
- 6: Tragschiene
- 8: elektromechanischer Stecker
- 9: Rasthaken
- 11: Trichter
- 12: Einführungsrampe
- 13: Niederdrücker
- 14: untere Schutzwand
- 15: obere Schutzwand

## Patentansprüche

1. Stromschiene für Funktionseinsätze eines Beleuchtungssystems, umfassend:
längliche Tragschienen (6), welche einen Aufnahmeraum (5) für die Funktionseinsätze bilden, und
längliche Leitungshalter (4), die in den Tragschienen (6) angeordnet sind und die eine Anzahl von parallel zueinander ausgerichteten elektrisch leitfähigen Leitern (2) halten, welche von Stromabnehmern der Funktionseinsätze kontaktierbar sind,
wobei die Leitungshalter (4) stirnseitig aneinander koppelbar sind, so dass die Leiter (2) der zwei Leitungshalter (4) jeweils paarweise elektrisch miteinander verbunden sind,
**dadurch gekennzeichnet, dass** im stirnseitigen Kopplungsbereich der zwei Leitungshalter (4) ein Adernkäfig (1) angeordnet ist, wobei der Adernkäfig (1) auf Leitungsenden der Leiter (2) eines der beiden Leitungshalter (4) stirnseitig aufgesteckt ist und die Leitungsenden in einer Länge, mit der sie über ein stirnseitiges Ende des Leitungshalters (4) überstehen, abdecken, wobei die Leiter (2) der zwei Leitungshalter (4) jeweils paarweise in Längsrichtung durch elektromechanische Steckverbinder elektrisch und mechanisch verbunden sind, wobei die elektromechanischen Steckverbinder wenigstens teilweise in den Adernkäfig (1) hineinragen.

2. Stromschiene nach Anspruch 1, wobei der Adernkäfig (1) für alle oder wenigstens für einige der Leitungsenden Durchgangsöffnungen aufweist, welche jeweils eine der Leitungsenden umgreifen.

3. Stromschiene nach Anspruch 2, wobei die Durchgangsöffnungen auf einer in Steckrichtung zu den Leitungsenden weisenden Seite konische Trichter (11) und/oder Einführungsrampen (12) aufweisen.

4. Stromschiene nach einem der vorhergehenden Ansprüche, wobei der Adernkäfig (1) mit einem oder mehreren Schnapphaken (3) an dem einen der Leitungshalter (4), dessen Leitungsenden vom Adernkäfig (1) abgedeckt sind, gesichert ist.

5. Stromschiene nach einem der vorhergehenden Ansprüche, wobei der Adernkäfig (1) wenigstens eine, vorzugsweise zwei, Schutzwände aufweist, die in Ebenen parallel zu den Leitern über und/oder unter den Leitungsenden angeordnet sind.

6. Stromschiene nach Anspruch 5, wobei sich wenigstens eine der Schutzwände in der Richtung entgegengesetzt zu der Steckrichtung, mit welcher der Adernkäfig (1) auf das stirnseitige Ende des Leitungshalters aufgesteckt wird, verjüngen.

7. Stromschiene nach einem der vorhergehenden Ansprüche, wobei die Leitungshalter (4) eingerichtet sind, um die Leiter (2) in wenigstens einer ersten und einer zweiten parallelen Ebene versetzt zueinander zu halten, und
der Adernkäfig (1) Niederdrückrampen entsprechend der Anzahl der Leiter in der zweiten Ebene aufweist, welche eingerichtet sind, um die Leiter (2) in der zweiten Ebene beim Aufstecken auf die Leitungsenden gegenüber der ersten Ebene wegzudrücken.

8. Stromschiene nach einem der vorhergehenden Ansprüche, wobei die elektromechanischen Steckverbinder jeweils wenigstens vier Schenkel aufweisen, wobei jeweils wenigstens zwei der Schenkel ein Leitungsende klammerartig umgreifen.

9. Stromschiene nach einem der vorhergehenden Ansprüche, wobei die elektromechanischen Steckverbinder in einem Stecker (8) zusammengefasst und entsprechend der Lage der zu verbindenden Leiter (2) ausgerichtet sind.

10. Stromschiene nach Anspruch 9, wobei der Stecker (8) beim Zusammenfügen der Leitungshalter (4) in dem Adernkäfig (1) teilweise eintaucht und vorzugsweise, bei Rückbezug auf den Anspruch 6, wenigstens eine der sich verjüngenden Schutzwände (14,15) an dem Stecker (8) anliegt.

## Claims

1. Busbar for functional inserts of a lighting system, comprising:
elongate carrier rails (6) which form a receiving space (5) for the functional inserts, and
elongate line holders (4) which are arranged in the carrier rails (6) and which hold a number of electrically conductive conductors (2) which are aligned parallel to one another and which can be contacted by current collectors of the functional inserts,
wherein the line holders (4) can be coupled to one another at the end side, with the result that the conductors (2) of the two line holders (4) are in each case electrically connected to one another in pairs,
**characterized in that** a wire cage (1) is arranged in the end-side coupling region of the two line holders (4), wherein the wire cage (1) is plugged onto line ends of the conductors (2) of one of the two line holders (4) at the end side and covers the line ends over a length with which they project beyond an end-side end of the line holder (4), wherein the conductors (2) of the two line holders (4) are in each case electrically and mechanically connected in pairs in the longitudinal direction by electromechanical plug connectors, wherein the electromechanical plug connectors project at least partially into the wire cage (1).

2. Busbar according to Claim 1, wherein the wire cage (1) has passage openings for all or at least for some of the line ends, which passage openings in each case engage around one of the line ends.

3. Busbar according to Claim 2, wherein the passage openings have conical funnels (11) and/or insertion ramps (12) on a side which points towards the line ends in the plug-in direction.

4. Busbar according to one of the preceding claims, wherein the wire cage (1) is secured by way of one or more snap hooks (3) on that one of the line holders (4) whose line ends are covered by the wire cage (1).

5. Busbar according to one of the preceding claims, wherein the wire cage (1) has at least one, preferably two, protective walls which are arranged in planes parallel to the conductors above and/or below the line ends.

6. Busbar according to Claim 5, wherein at least one of the protective walls tapers in the direction opposite to the plug-in direction with which the wire cage (1) is plugged onto the end-side end of the line holder.

7. Busbar according to one of the preceding claims, wherein the line holders (4) are configured to hold the conductors (2) offset with respect to one another in at least a first and a second parallel plane, and
the wire cage (1) has push-down ramps corresponding to the number of conductors in the second plane, which push-down ramps are configured to push away the conductors (2) in the second plane with respect to the first plane when they are plugged onto the line ends.

8. Busbar according to one of the preceding claims, wherein the electromechanical plug-in connectors in each case have at least four limbs, wherein in each case at least two of the limbs engage around a line end in a clamp-like manner.

9. Busbar according to one of the preceding claims, wherein the electromechanical plug-in connectors are combined in a plug (8) and are aligned corresponding to the position of the conductors (2) to be connected.

10. Busbar according to Claim 9, wherein the plug (8) partially dips into the wire cage (1) when the line holders (4) are joined together and preferably, with reference back to Claim 6, at least one of the tapering protective walls (14, 15) bears against the plug (8).

## Revendications

1. Barre conductrice pour des inserts fonctionnels d'un système d'éclairage, comprenant :
des rails porteurs allongés (6) qui forment un espace de réception (5) pour les inserts fonctionnels, et
des supports de ligne allongés (4) qui sont disposés dans les rails porteurs (6) et qui maintiennent un certain nombre de conducteurs électriquement conducteurs (2) orientés parallèlement les uns aux autres, lesquels peuvent être mis en contact avec des collecteurs de courant des inserts fonctionnels,
dans laquelle les supports de ligne (4) peuvent être raccordés les uns aux autres du côté frontal, de sorte que les conducteurs (2) des deux supports de ligne (4) sont respectivement connectés électriquement les uns aux autres par paires,
**caractérisée en ce qu'**une cage à fils (1) est disposée dans la région de raccordement de côté frontal des deux supports de ligne (4), dans laquelle la cage à fils (1) est enfichée du côté frontal sur des extrémités de ligne des conducteurs (2) de l'un des deux supports de ligne (4) et recouvre les extrémités de ligne sur une longueur avec laquelle elles font saillie au-delà d'une extrémité du côté frontal du support de ligne (4), dans laquelle les conducteurs (2) des deux supports de ligne (4) sont respectivement connectés électriquement et mécaniquement par paires dans la direction longitudinale par des connecteurs enfichables électromécaniques, dans laquelle les connecteurs enfichables électromécaniques font saillie au moins en partie dans la cage à fils (1).

2. Barre conductrice selon la revendication 1, dans laquelle la cage à fils (1) présente des ouvertures de passage pour toutes les extrémités de ligne ou au moins pour certaines d'entre elles, lesquelles entourent respectivement l'une des extrémités de ligne.

3. Barre conductrice selon la revendication 2, dans laquelle les ouvertures de passage présentent des entonnoirs coniques (11) et/ou des rampes d'introduction (12) sur un côté tourné vers les extrémités de ligne dans la direction d'enfichage.

4. Barre conductrice selon l'une quelconque des revendications précédentes, dans laquelle la cage à fils (1) est fixée avec un ou plusieurs crochets d'encliquetage (3) sur l'un des supports de ligne (4), dont les extrémités de ligne sont recouvertes par la cage à fils (1).

5. Barre conductrice selon l'une quelconque des revendications précédentes, dans laquelle la cage à fils (1) présente au moins une, de préférence deux, parois de protection qui sont disposées dans des plans parallèles aux conducteurs au-dessus et/ou en dessous des extrémités de ligne.

6. Barre conductrice selon la revendication 5, dans laquelle au moins l'une des parois de protection se rétrécit dans la direction opposée à la direction d'enfichage avec laquelle la cage à fils (1) est enfichée sur l'extrémité du côté frontal du support de ligne.

7. Barre conductrice selon l'une quelconque des revendications précédentes, dans laquelle les supports de ligne (4) sont conçus pour maintenir les conducteurs (2) décalés les uns par rapport aux autres dans au moins un premier et un deuxième plan parallèle, et
la cage à fils (1) présente des rampes de pression vers le bas correspondant au nombre de conducteurs dans le deuxième plan, lesquelles sont conçues pour repousser les conducteurs (2) dans le deuxième plan par rapport au premier plan lors de l'enfichage sur les extrémités de ligne.

8. Barre conductrice selon l'une quelconque des revendications précédentes, dans laquelle les connecteurs enfichables électromécaniques présentent respectivement au moins quatre branches, dans laquelle respectivement au moins deux des branches entourent une extrémité de ligne à la manière d'une pince.

9. Barre conductrice selon l'une quelconque des revendications précédentes, dans laquelle les connecteurs enfichables électromécaniques sont regroupés dans une fiche (8) et sont orientés selon la position des conducteurs (2) à connecter.

10. Barre conductrice selon la revendication 9, dans laquelle la fiche (8) s'enfonce partiellement dans la cage à fils (1) lors de l'assemblage des supports de ligne (4) et dans laquelle, de préférence, en référence à la revendication 6, au moins l'une des parois de protection (14, 15) qui se rétrécissent est disposée contre la fiche (8).
